(19) **Europäisches Patentamt / European Patent Office / Office européen des brevets**

(11) **EP 1 721 944 B1**

(12) **EUROPEAN PATENT SPECIFICATION**

(45) Date of publication and mention
of the grant of the patent:
**27.08.2008 Bulletin 2008/35**

(51) Int Cl.:
***C09D 11/00*** *(2006.01)*

(21) Application number: **06113781.6**

(22) Date of filing: **10.05.2006**

(54) **Ink Set comprising surfactants with different HLB values**

Tintensatz enthaltend Surfactants mit unterschiedlichen HLB Werten

Ensemble d'encre contenant de surfactants de valeurs HLB differentes

(84) Designated Contracting States:
**DE FR GB NL**

(30) Priority: **11.05.2005 KR 205039233**

(43) Date of publication of application:
**15.11.2006 Bulletin 2006/46**

(73) Proprietor: **Samsung Electronics Co., Ltd.**
**Suwon-si,**
**Gyeonggi-do 442-742 (KR)**

(72) Inventor: **Lee, Jong-in**
**205 Oneroom**
**260-5 Woncheon-dong**
**Gyeonggi-do (KR)**

(74) Representative: **Killin, Stephen James et al**
**Venner Shipley LLP**
**20 Little Britain**
**London EC1A 7DH (GB)**

(56) References cited:
**US-A- 5 626 655**       **US-A1- 2003 196 570**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 721 944 B1

**Description**

The present general inventive concept relates to an ink set, an ink cartridge including the same and an inkjet recording apparatus including the ink cartridge. More particularly, the present general inventive concept relates to an ink set that includes color inks having surfactant components of different hydrophilic lipophilic balance (HLB) values, is rapidly dried when used to print a full color image on a recording medium, and can reproducibly form a clear image without causing bleeding at a color interface, an ink cartridge including the ink set, and an inkjet recording apparatus including the ink cartridge.

Printing methods are largely divided into non-impact printing and impact printing. Inkjet printing is one type of non-impact printing. In general, inkjet printing is less noisy than contact printing and can make a color image in a simpler way than laser beam printing.

Inkjet printing is also divided into continuous-stream printing and drop-on-demand (DOD) printing. In continuous-stream inkjet printing, ink is continuously ejected by pressure via orifices or nozzles. Ejected ink is deranged while forming droplets at a specific distance from the orifices. The ink droplets carry charges according to a digital data signal while being dispersed, and their orbit is controlled while passing through an electric field. Thus, these ink droplets are recycled or directed to a gutter in a specific position on a recording medium. In drop-on demand printing, ink droplets are directly ejected from orifices to a position on a recording medium according to a digital data signal. Also, ink droplets which are not ejected onto the recording medium are not discharged. Drop-on-demand printing is far simpler than continuous stream printing since it does not require ink recovery, charge, or deflection.

Drop-on-demand printing is divided into thermal inkjet (or bubble jet) printing and piezoelectric inkjet printing.

In thermal inkjet printing, ink is ejected by pressure generated by the expansion of bubbles formed by heating ink. Thus, ink droplets can be ejected at a high speed. In addition, in a printing apparatus using this type of printing, nozzles can be aligned at close intervals to each other. This drop-on-demand printing is simpler, faster, and more economical than continuous stream printing.

Recently, there have been attempts to reduce a dot size of an inkjet printer, to increase the operating speed of the inkjet printer, and to print images having high resolution. In order to obtain a smaller dot size, the head of an inkjet printer must have smaller nozzle openings. However, such nozzle openings can be easily clogged and the size of inkjet droplets is affected by precipitates. In addition, the composition of ink affects nozzle clogging. Thus, a wetting agent is usually added to ink to solve this problem.

In general, ink for inkjet printing should not cause nozzle clogging, should maintain the stability of ink discharge, and should have a sufficiently high optical density. Also, when a color image is printed using black ink together with, for example, at least one color ink selected from among magenta ink, cyan ink, yellow ink, red ink, green ink, and blue ink, the image quality must not deteriorate due to bleeding at the interface between a black image part and a color image part on a recording medium where ink is non-homogeneously mixed (hereinafter, referred to "bleeding").

In order to prevent or reduce bleeding, a method of increasing the permeability of ink into a recording medium by the addition of surfactants (Japanese Patent Application Laid-open No. 55-65269), and a method of shortening the drying time of ink by using a volatile solvent (Japanese Patent Application Laid-open No. 55-66976) have been suggested.

However, in the above methods, there is a problem in that the stability of ink discharge decreases due to the use of a specific additive, and the optical density and the quality of images decrease due to an excessive penetration of ink into a recording medium.

The present general inventive concept provides ink sets that rapidly dry when used to print a full color image on a recording medium, and can reproducibly form a clear image without causing bleeding at a color interface, an ink cartridge containing one or more of the ink sets, and an inkjet recording apparatus including the ink cartridge.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept may be achieved by providing an ink set comprising at least two kinds of color inks: the first kind of color ink containing a first colorant, an organic solvent, water and a surfactant component that is one or more ionic surfactant compounds; and the second kind of color ink containing a second colorant, an organic solvent, water and a surfactant component that is one or more ionic surfactant compounds, one or more non-ionic surfactant compounds, or a mixture thereof; wherein the hydrophilic lipophilic balance value of the surfactant component of the second ink is smaller than the hydrophilic lipophilic balance value of the surfactant component of the first ink.

The foregoing and/or other aspects and utilities of the present general inventive concept may also be achieved by providing an ink cartridge containing the ink set, or an inkjet recording apparatus including the ink cartridge containing the ink set.

The above and/or other aspects and advantages of the present general inventive concept will become apparent and more readily appreciated from the following description of the embodiments, taken in conjunction with the accompanying drawings of which:

FIG. 1 is a sectional view illustrating an arrangement of a surfactant at a surface of ink on a sheet according to an embodiment of the present general inventive concept;

FIG. 2 is a perspective view of an inkjet recording apparatus according to an embodiment of the present general inventive concept including an ink cartridge containing ink sets according to various embodiments of the present general inventive concept; and

FIG. 3 is a sectional view illustrating an ink cartridge according to an embodiment of the present general inventive concept including ink sets according to various embodiments of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

A surface tension of a solution containing surfactants depends on a concentration of a surfactant nearest to the surface of the solution. When one kind of surfactant is used, the higher the concentration of the surfactant nearest the surface of a solution containing the surfactant, the smaller the surface tension of the solution. When the surface or interface of a solution containing a surfactant rapidly expands due to, for example, bubbling or emulsification, the surfactant in the solution migrates onto the surface of the solution, thereby lowering the surface tension of the solution from an initial value (e.g., 72.4 dyne/cm at 25°C for distilled water) of the solution before the surfactant is added to an equilibrium surface tension of the solution containing the surfactant (i.e., after the surfactant is added).

When the migration speed of the surfactant onto the surface of the solution is rapid, the surface tension of the solution rapidly reaches an equilibrium value. However, when the migration speed of the surfactant onto the surface of the solution is slow, the surface tension of the solution slowly decreases to the equilibrium value. A surface tension of an aqueous ink solution in a transition state where the surface tension varies from an initial value (i.e., the surface tension of the solution before the surfactant is added) to an equilibrium surface tension is referred to as a "dynamic surface tension," which varies according to a speed at which a new surface of the solution (i.e., the surface on to which the surfactant has migrated) is generated and a time it takes for the new surface of the solution to be generated.

In thermal inkjet printing, a dynamic surface tension is closely related to a change in an orientation of a surfactant that occurs as time passes after new surfaces or interfaces are formed due to bubbles generated by heating of ink containing the surfactant. In addition, due to agitation occurring when ejected ink contacts a medium (e.g., paper), a degree of permeation of the ink into the medium (e.g., the paper) varies according to a change in the dynamic surface tension with time.

To be used in high-speed printing, which is becoming popular, a drying time of ink on a medium (e.g., general paper) must be maintained below 1 second to prevent smearing during continuous printing.

Through experiments of measuring dynamic surface tensions of inks containing various kinds of surfactants, it was found that a dynamic surface tension of an ink using an ionic surfactant is maintained very low and a drying speed of the ink on general paper can be 1 second or less. Further, bleeding between color inks can be reduced when the color inks contain surfactants having different hydrophilic lipophilic balance (HLB) values.

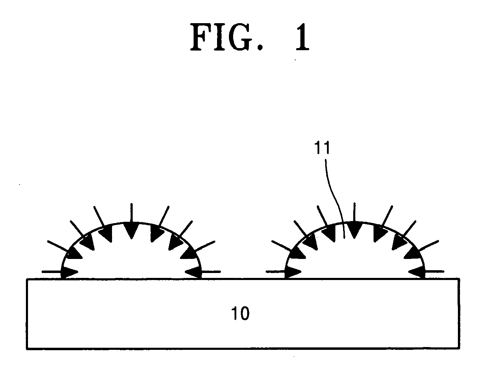

Referring to FIG. 1, ink droplets 1 ejected onto paper (receptor) 2 permeate into the paper and contact each other on a surface of the paper. A surfactant is dispersed on the outermost surface of each of the ink droplets 1 and contacts other ink droplets earlier than other components of the ink droplets. Head portions of arrows in FIG. 1 are hydrophilic portions of the surfactant, and tail portions of the arrows are lipophilic portions of the surfactant.

A surfactant has a HLB value of 1 to 50 according to its hydrophilicity or lipophilicity. A HLB value closer to 50 indicates a higher hydrophilicity, and a HLB value closer to 1 indicates a higher lipophilicity. Therefore, when an ink set is constructed with a first ink containing an ionic surfactant component to increase a drying speed of the ink, bleeding can be improved by using a second ink containing a surfactant component having a different HLB value from the surfactant component in the first ink. Here, the effect of improving bleeding can be due to an interfacial repulsion of ink droplets.

In the present general inventive concept, the first kind of color ink contains a first colorant, an organic solvent, water, and a surfactant component that is one or more ionic surfactant compounds, and the second kind of color ink contains a second colorant, an organic solvent, water and a surfactant component that is one or more ionic surfactant compounds, one or more non-ionic surfactant compounds, or a mixture thereof, wherein the HLB value of the surfactant component of the second ink is smaller than the HLB value of the surfactant component of the first ink.

The difference between the HLB values of the surfactant components of the first and second inks may be in a range of about 2 to about 20. When the difference between the HLB values of the surfactant components of the first and second inks is less than about 2, an interaction between the two surfactant components is so strong that bleeding resistance may become worse. When the difference between the HLB values of the surfactant components of the first and second inks exceeds about 20, due to the repulsion between the first and second inks, ink coverage on the paper surface may become worse and thus undesirable white lines may appear.

The first colorant of the first ink may be, for example, a black colorant, and the second colorant of the second ink may be, for example, a magenta, cyan, or yellow colorant.

In embodiments of the present general inventive concept, a self-dispersible dye, a self-dispersible pigment, or a common pigment or dye used together with a dispersant can be used as a colorant.

In an embodiment of the present general inventive concept, the colorant may include a black pigment and at least one compound selected from the group consisting of magenta, cyan, yellow, red, green, and blue dyes or pigments.

Examples of suitable ionic surfactants include, but are not limited to, a salt of C1-C20 alkyl carboxylic acid, a salt of C1-C20 alkyl sulfonic acid ester, a salt of C1-C20 alkyl sulfonic acid, a salt of C1-C20 alkyl benzene sulfonic acid, a salt of C1-C20 fatty acid amine, a quaternary ammonium salt, a sulfonium salt, a phosphonium salt, and the like.

Examples of suitable non-ionic surfactants include, but are not limited to, polyoxyethylene alkyl ether, polyoxyethylene alkyl phenyl ether, polyoxyethylene secondary alcohol ether, polyoxyethylene-oxypropylene block copolymer, polyglycerine fatty acid ester, sorbitan fatty acid ester, acetylenic polyalkylene oxide, acetylenic diol, and the like.

Examples of suitable organic solvents include, but are not limited to, a co-solvent, an amide-based compound, and mixtures thereof. A total amount of the organic solvent in the ink may be about 0.5 to about 20 parts by weight based on 1 part by weight of the colorant. When the amount of the organic solvent is less than about 0.5 parts by weight based on 1 part by weight of the colorant, it is difficult to provide a wetting effect and storage stability. When the amount of the organic solvent exceeds about 20 parts by weight based on 1 part by weight of the colorant, a viscosity of the ink composition increases and a particle size of the ink composition greatly increases.

Examples of suitable co-solvents include, but are not limited to, an alcohol compound, such as methyl alcohol, ethyl alcohol, n-propyl alcohol, isopropyl alcohol, n-butyl alcohol, sec-butyl alcohol, t-butyl alcohol, or isobutyl alcohol; a polyhydric alcohol compound, such as 1,6-hexanediol, 1,2-hexanediol, ethylene glycol, diethylene glycol, triethylene glycol, propylene glycol, butylene glycol, 1,4-butanediol, 1,2,4-butanetriol, 1,5-pentanediol, 1,2,6-hexanetriol, trimethanol propane, hexylene glycol, glycerol, or poly(ethylene glycol); a ketone compound, such as acetone, methylethyl ketone, or diacetone alcohol; an ether compound, such as ethyl acetate or ethyl lactate; a lower alkyl ether compound, such as ethylene glycol monomethyl ether, ethylene glycol monoethyl ether, diethylene glycol methyl ether, diethylene glycol ethyl ether, diethylene glycol monobutyl ether, diethylene glycol diethyl ether, triethylene glycol monomethyl ether, or triethylene glycol monoethyl ether; a sulfur-containing compound, such as dimethyl sulfoxide, tetramethylene sulfone, or thioglycol; and mixtures thereof.

Suitable amide compounds include, but are not limited to, at least one compound selected from the group consisting of 2-pyrrolidone, 2-piperidone, N-methyl-pyrrolidone, caprolactam, tetrahydro-2-pyrimidone, 3-methyl-tetrahydro-2-pyrimidone, 2-imidazolidinone, dimethyl imidazolidinone, diethyl imidazolidinone, butyl urea, 1,3-dimethyl urea, ethyl urea, propyl urea, isopropyl urea, and 1,3-diethyl urea.

When a mixture of the co-solvent and the amide compound is used as the organic solvent, an amount of the amide compound in the ink may be in a range of about 0.1 to about 50 parts by weight based on 1 part by weight of the organic solvent.

In ink sets according to various embodiments of the present general inventive concept, an amount of the surfactant component in an ink can be in a range of about 0.01 to about 2 parts by weight based on 1 part by weight of a colorant. When the amount of the surfactant component is less than about 0.01 parts by weight based on 1 part by weight of the colorant, an effect of reducing a surface tension is insignificant. When the amount of the surfactant component exceeds about 2 parts by weight based on 1 part by weight of the colorant, the surface tension of the ink is too small to form suitable droplets, and the ink is too wet on a nozzle surface to be accurately ejected.

In ink sets according to various embodiments of the present general inventive concept, an amount of water may be in a range of about 1 to about 30 parts by weight based on 1 part by weight of the colorant. When the amount of water is less than about 1 part by weight based on 1 part by weight of the colorant, a density of the colorant in ink is so large and undesirably increases a viscosity of the ink . When the amount of water exceeds about 30 parts by weight based on 1 part by weight of the colorant, the amount of the colorant is too small to express color.

In embodiments, the ink compositions may include an additive, such as a viscosity controller.

In embodiments, the ink compositions may include an acid or a base. The acid or the base increases a solubility of a wetting agent in a solvent of the ink and stabilizes a pigment of the ink.

Hereinafter, a method of preparing ink sets according to various embodiments of the present general inventive concept and an ink set containing the same will be described.

First, a first colorant, a surfactant component, and an organic solvent are added into water and mixed with a stirrer into a homogeneous state.

Then, the resulting product is filtered through a filter to obtain a first ink composition.

Separately, a second colorant, a surfactant component, an organic solvent, and water are mixed and then filtered to obtain a second ink composition.

Ink sets according to various embodiments of the present general inventive concept can be obtained by mixing the first ink composition and the second ink composition. In addition to the first ink composition and the second ink composition, a third ink composition of a different color than the first and second ink compositions can be further added.

The ink sets obtained through the above-described processes have a surface tension of about 15 to about 70 dyne/cm at 20°C and a viscosity of about 1.0 to about 20 Cp at 20°C. Further, a drying time of the ink sets on general paper is about 0.05 to about 3 seconds or less. For example, the drying time of the ink sets on general paper can be about 0.1 to about 1 second, and the drying speed of the ink set is very fast.

Use of the ink sets is not limited, and thus ink sets according to various embodiments of the present general inventive can be used in a toner composition, various paints, a coating liquid, and the like, in addition to being used for inkjet printing.

In embodiments of the present general inventive concept the ink sets can be used in an inkjet printer cartridge having an array head. Unlike a shuttle-type inkjet printer performing printing while moving a single chip, an ink jet printer using an array head can perform high-speed printing using a plurality of chips and leads to a higher throughput.

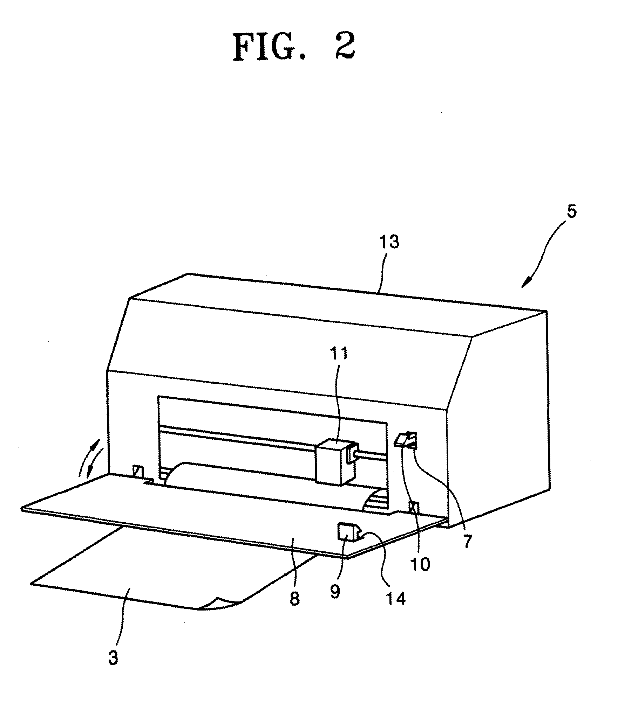

Referring to FIG. 2, an inkjet recording apparatus according to an embodiment of the present general inventive concept can include an ink cartridge 11 containing ink sets according to various embodiments of the present general inventive concept. A printer cover 8 is connected to a main body 13 of a printer 5. An engaging portion of a movable latch 10 protrudes through a hole 7. The movable latch 10 engages with a fixed latch 9. The fixed latch 9 is coupled to an inner side of the printer cover 8 when the printer cover 8 is closed. The printer cover 8 has a recess 14 in a region corresponding to the engaging portion of the movable latch 10 protruding through the hole 7. An ink cartridge 11 is mounted such that the ink set can be ejected onto paper 3 passing below the ink cartridge 11.

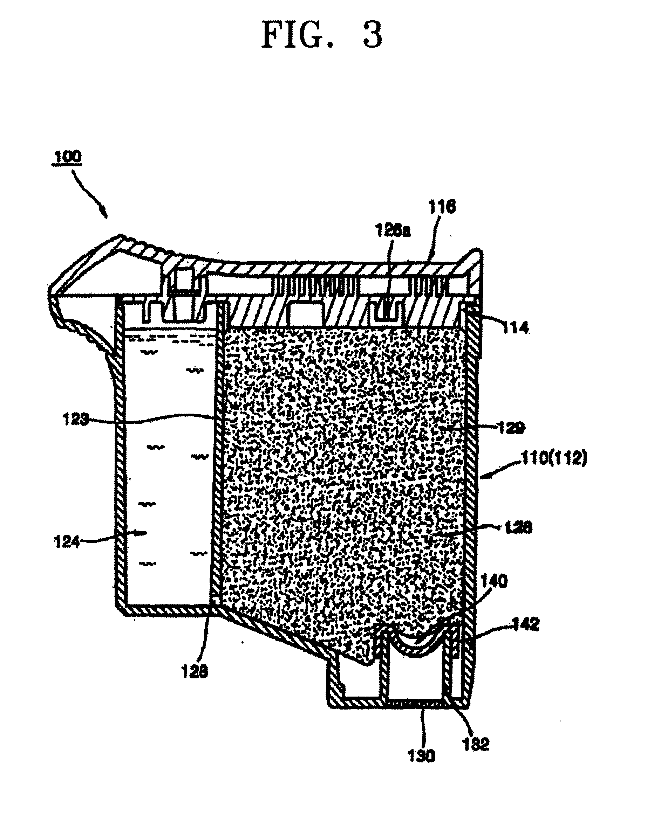

FIG. 3 is a sectional view of an ink cartridge 100 according to an embodiment, and containing ink sets according to various embodiments of the present general inventive concept. An ink cartridge 100 can include a cartridge main body 110 forming a ink receiver 112, an inner cover 114 covering a top of the ink receiver 112, and an outer cover 116 that is spaced a predetermined interval apart from the inner cover 114 and seals the ink receiver 112 and the inner cover 114.

The ink receiver 112 can be partitioned into a first chamber 124 and a second chamber 126 by a vertical barrier wall 123. An ink passage 128 can be formed in a bottom portion of the vertical barrier wall 123 between the first chamber 124 and the second chamber 126. An ink set can fill the first chamber 124, a sponge 129, and the second chamber 126. A vent hole 126a can be formed in a region of the inner cover 114 corresponding to the second chamber 126.

A filter 140 can be formed below the second chamber 126 and can filter impurities and micro bubbles from the ink sets to prevent clogging of ejection holes of a printer head 130. A hook 142 is formed on an edge of the filter 140 and can be coupled to an upper portion of a standpipe 132. The ink sets in the ink receiver 120 can be ejected through the ejection holes of the printer head 130 onto a printing medium as small droplets.

Ink sets according to various embodiments of the present general inventive concept may be used in an inkjet printer including an array head having 10,000 nozzles or more.

The present general inventive concept will be described in greater detail with reference to the following examples. The following examples are for illustrative purposes only and are not intended to limit the scope of the general inventive concept.

EXAMPLES

Materials listed below were used in the following examples.

Colorants
Black 1: Raven 5250, manufactured by Columbian Co.,
Black 2: Regal 330, manufactured by Cabot Co.,
Cyan 1: Direct Turquoise Blue, manufactured by Clariant,
Cyan 2: Direct Blue 199, manufactured by Hodogaya,
Magenta 1: Basacid Rot 495, manufactured by BASF,
Magenta 2: Acid Red 52, manufactured by Hodogaya,
Yellow 1: Yellow GGN, manufactured by Spectra, and
Yellow 2: Basacid Yellow 099, manufactured by BASF.
Organic solvents
EG: Ethylene Glycol
DEG: Diethylene Glycol
Gly: Glycerine
1,2,6-hex: 1,2,6-hexanetriol

DEGMBE: Diethyleneglycol Monobutyl Ether

Amide compounds

2-P: 2-pyrrolidone

NMP: N-methyl-2-pyrrolidone

Cyclo-P: Cyclohexyl pyrrolidone

C-lactam: Caprolactam

V-lactam: Valerolactam.

Surfactants

Surfactant 1: Sodium dicyclohexyl sulfosuccinate manufactured by CYTEC

Surfactant 2: Sodium dioctyl sulfosuccinate manufactured by CYTEC

Surfactant 3: Sodium dihexyl sulfosuccinate manufactured by CYTEC

Surfactant 4: Tergitol manufactured by ICI

Surfactant 5: Surfynol 465 manufactured by Air Product

Surfactant 6: Pluronics manufactured by BASF.

Ink compositions were prepared using the above-listed colorants, organic solvents, and surfactants according to the following method. The colorants, organic solvents, and surfactants were put into 250mL beakers according to the compositions of Table 1 and then water was added up to 100 g. Then, each of the mixtures was mixed in a stirrer at 700rpm into a homogeneous state and finally filtered through a 0.45μm filter to obtain a final ink composition. The amounts in Table 1 are based on 100 parts by weight of the ink composition (colorant) or 1 part by weight of the colorant (organic solvent and surfactant).

Table 1

| Sample | Colorant (parts by weight) | Organic solvent (parts by weight) | Surfactant component (parts by weight) |
|---|---|---|---|
| Ink composition 1 | Black 1 (4) | EG (8), DEG (6) | Surfactant 1 (0.3) |
| Ink composition 2 | Cyan 1 (4) | Gly (10), DEGMBE (8), NMP (5) | Surfactant 4 (0.5) |
| Ink composition 3 | Magenta 1 (4) | 1,2,6-Hex(10), Cyclo-P (8) | Surfactant 5 (0.7) |
| Ink composition 4 | Yellow 1 (5) | Gly (10), DEG (6), V-lactam (4) | Surfactant 6 (1.0) |
| Ink composition 5 | Black 2 (4) | EG(6), 2-P (5) | Surfactant 5 (0.5), Surfactant 4 (0.05) |
| Ink composition 6 | Cyan 2 (4) | Gly (10), DEGMBE (2), NMP (7) | Surfactant 2 (0.8) |
| Ink composition 7 | Magenta 2 (4) | 1,2,6-Hex(10), DEG (6), Cyclo-P (6) | Surfactant 3 (1.0) |
| Ink composition 8 | Yellow 2 (5) | Gly (12), C-lactam (4) | Surfactant 1 (0.6), Surfactant 6 (0.6) |

HLB values of surfactant components in Examples 1-5 and Comparative Examples 1-3 (containing various combinations of the ink compositions of Table 1) are described in Table 2 below.

Table 2

| Ink Set Example | Ink composition (from Table 1) | HLB value | Ink Set Comparative Example | Ink composition (from Table 1) | HLB value |
|---|---|---|---|---|---|
| Example 1 | Ink composition 1 | 21 | Comparative Example 1 | Ink composition 5 | 12 |
| | Ink composition 2 | 12 | | Ink composition 2 | 12 |
| | HLB difference | 9 | | HLB difference | 0 |
| Example 2 | Ink composition 1 | 21 | Comparative Example 2 | Ink composition 5 | 12 |
| | Ink composition 3 | 13 | | Ink composition 3 | 13 |
| | HLB difference | 8 | | HLB difference | 1 |
| Example 3 | Ink composition 1 | 21 | Comparative Example 3 | Ink composition 5 | 12 |
| | Ink composition 4 | 8 | | Ink composition 7 | 35 |
| | HLB difference | 13 | | HLB difference | 23 |
| Example 4 | Ink composition 1 | 21 | | | |
| | Ink composition 6 | 39 | | | |
| | HLB difference | 18 | | | |
| Example 5 | Ink composition 1 | 21 | | | |
| | Ink composition 8 | 17 | | | |
| | HLB difference | 4 | | | |

Experimental Example 1: Test of Ink Set Storage Stability

Each of the ink sets obtained from Examples 1-5 and Comparative Examples 1-3 were put into a Samsung ink cartridge M-50 (Samsung Electronics Co., Ltd.), left at ambient temperature (25°C) and low temperature (-5°C) each for 2 weeks, and used for printing using a printer (MJC-2400C, Samsung Electronics Co., Ltd.). A degree of clogging of nozzles of each of the ink cartridges disabling ink ejection was evaluated as follows. The results are described in Table 3 below according to the following criteria:

⊚ : 5% or less of the nozzles were clogged.
O: 6-10% of the nozzles were clogged.
X: 11-20% of the nozzles were clogged.
XX: 21% or more of the nozzles were clogged.

Experimental Example 2: Dryness Test

An ink cartridge M-50 (Samsung Electronics Co., Ltd.) was filled with each of the ink sets prepared according to Examples 1-5 and Comparative Examples 1-3 and used to print a bar of 3 X 20 cm on paper using a printer (MJC-2400C, Samsung Electronics Co., Ltd.). Immediately after the printing, a blank sheet was put on the printed surface of the paper and passed through a press roll tester. The OD (optical density) value of an image transferred to the blank sheet with respect to the OD value of the bar image printed on the paper before being passed through the press roll tester was calculated and expressed as a percentage. The results are described in Table 3 below according to the following criteria:

$$A\% = (OD \text{ of the transferred image}/OD \text{ of the original bar image}) \times 100$$

⊚ : A < 15
O: 15 ≤ A < 30
X: 30 ≤ A ≤ 45
XX: A > 45

Experimental Example 3: Bleeding Resistance Test

An ink cartridge M-50 (Samsung Electronics Co., Ltd.) was filled with each of the ink sets prepared according to Examples 1-5 and Comparative Examples 1-3 and used together with a C-60 color ink (Samsung Electronics Co., Ltd.) to print a test pattern using a printer (MJC-2400C, Samsung Electronics Co., Ltd.). After 30 minutes, a region of dot lines around a border line of adjacent different color images in which color mixing had occurred was observed using a microscope, and a degree of bleeding resistance was evaluated. The results are described in Table 3 below according to the following criteria (see US 5,854,307):

5: No color mixing occurred on the entire border line.

4: Color mixing occurred in a region having a width corresponding to the diameter of 1 dot.

3: Color mixing occurred in a region having a width corresponding to the diameter of 2 dots.

2: Color mixing occurred in a region having a width corresponding to the diameter of 3 dots.

1: Color mixing occurred in a region having a width corresponding to 4 or more dots (where the diameter of 1 dot at 600dpi = 100 $\mu$m).

Table 3

| Example | HLB Difference between surfactant components | Storage stability of cartridge | Dryness | Bleeding resistance |
|---|---|---|---|---|
| Example 1 | 9 | ◎ | ◎ | 5 |
| Example 2 | 8 | ◎ | O | 5 |
| Example 3 | 13 | O | ◎ | 5 |
| Example 4 | 18 | ◎ | ◎ | 5 |
| Example 5 | 4 | ◎ | ◎ | 4 |
| Comparative Example 1 | 0 | X | X | 2 |
| Comparative Example 2 | 1 | X | X | 2 |
| Comparative Example 3 | 23 | O | XX | 3 |

As described in Table 3, Examples 1-5 having an HLB difference of about 2 to about 20 exhibit superior storage stability, superior drying characteristics, and superior bleeding resistance as compared to each of Comparative Examples 1-3 having an HLB difference of less than about 2 or greater than about 22. Furthermore, Examples 1-5 exhibit a superior combination of storage stability, superior drying characteristics, and superior bleeding resistance as compared to each of Comparative Examples 1-3.

As described above, ink sets according to various embodiments of the present general inventive concept include a combination of ink compositions containing surfactant components having different HLB values. When printing a full color image on a recording medium using the ink sets, the drying time is short, and a clear image without bleeding at a color interface can be formed with reproducibility. In addition, ink sets according to various embodiments of the present general inventive concept have excellent discharge stability and storage stability and thus can be used in inkjet ink, printing ink, paint, dyeing, manufacturing paper and cosmetics, ceramics, as well as in other fields.

Although a few embodiments of the invention have been shown and described, it will be appreciated by those skilled in the art that changes may be made in these embodiments without departing from the principles and spirit of the general inventive concept.

**Claims**

1.  An ink set comprising:at least two kinds of color inks:

the first kind of color ink containing a first colorant, an organic solvent, water and a surfactant component that is one or more ionic surfactant compounds; and

the second kind of color ink containing a second colorant, an organic solvent, water and a surfactant component that is one or more ionic surfactant compounds, one or more non-ionic surfactant compounds, or a mixture thereof;

wherein the hydrophilic lipophilic balance value of the surfactant component of the second ink is smaller than the hydrophilic lipophilic balance value of the surfactant component of the first ink.

2. The ink set of claim 1, wherein the first colorant is a black colorant.

3. The ink set of claim 1 or 2, wherein a difference between the hydrophilic lipophilic balance values of the surfactant components of the first and second inks is in a range of about 2 to about 20.

4. The ink set of any of the preceding claims, wherein at least one colorant is one of a self-dispersible dye, a self-dispersible pigment, and a pigment or dye used together with a dispersant.

5. The ink set of any of the preceding claims, wherein at least one colorant comprises a black dye or pigment, and/or at least one member selected from the group consisting of magenta, cyan, yellow, red, green, and blue dyes or pigments.

6. The ink set of any of the preceding claims, wherein:

the one or more ionic surfactant compounds are selected from the group consisting of a salt of C1-C20 alkyl carboxylic acid, a salt of C1-C20 alkyl sulfonic acid ester, a salt of C1-C20 alkyl sulfonic acid, a salt of C1-C20 alkyl benzene sulfonic acid, a salt of C1-C20 fatty acid amine, a quaternary ammonium salt, a sulfonium salt, and a phosphonium salt; and

the one or more non-ionic surfactant compounds are selected from the group consisting of polyoxyethylene alkyl ether, polyoxyethylene alkyl phenyl ether, polyoxyethylene secondary alcohol ether, polyoxyethylene-oxypropylene block copolymer, polyglycerine fatty acid ester, sorbitan fatty acid ester, acetylenic polyalkylene oxide, and acetylenic diol.

7. The ink set of any one of the preceding claims, wherein an amount of the surfactant component is in a range of about 0.01 to about 2.0 parts by weight based on 1 part by weight of the colorant.

8. The ink set of any one of the preceding claims, wherein an amount of the organic solvent is in a range of about 1 to about 20 parts by weight based on 1 part by weight of the colorant.

9. The ink set of any one of the preceding claims, wherein an amount of water is in a range of about 1 to about 30 parts by weight based on 1 part by weight of the colorant.

10. The ink set of any one of the preceding claims, wherein the ink has a surface tension of 15-70 dyne/cm and a viscosity of 1.0-20 Cp at 20°C.

11. An ink cartridge (11, 100) containing the ink set of any one of the preceding claims.

12. An inkjet recording apparatus (5) including an ink cartridge (11, 100) as claimed in claim 11.

13. The inkjet recording apparatus of claim 12, wherein the inkjet recording apparatus is an inkjet printer using an array head having 10,000 or more nozzles.

14. Use of an ink set as claimed in any one of claims 1 to 10 in a toner composition, paint or coating liquid.

**Patentansprüche**

1. Tintenset, umfassend wenigstens zwei Arten von Farbtinten:

die erste Art Farbtinte enthaltend ein erstes Farbmittel, ein organisches Lösemittel, Wasser und eine Tensidkomponente, die eine oder mehrere ionische Tensidverbindungen ist; und

die zweite Art Farbtinte enthaltend ein zweites Farbmittel, ein organisches Lösemittel, Wasser und eine Tensidkomponente, die eine oder mehrere ionische Tensidverbindungen, eine oder mehrere nicht-ionische Tensidverbindungen oder Mischungen derselben ist;

wobei der hydrophile-lipophile Gleichgewichtswert der Tensidkomponente der zweiten Tinte kleiner ist als der hydrophile-lipophile Gleichgewichtswert der Tensidkomponente der ersten Tinte.

2. Das Tintenset des Anspruchs 1, worin das erste Farbmittel ein schwarzes Farbmittel ist.

3. Das Tintenset des Anspruchs 1 oder 2, worin die Differenz zwischen den hydrophilen-lipophilen Gleichgewichtswerten der Tensidkomponenten der ersten und zweiten Tinten in einem Bereich von etwa 2 bis etwa 20 liegt.

4. Das Tintenset nach einem der voranstehenden Ansprüche, worin wenigstens ein Farbmittel eines aus einem selbst dispergierenden Farbstoff, einem selbst dispergierenden Pigment, und einem Pigment oder einem Farbstoff ist, das zusammen mit einem Dispergiermittel verwendet wird.

5. Das Tintenset nach einem der voranstehenden Ansprüche, worin wenigstens ein Farbmittel einen schwarzen Farbstoff oder Pigment, und/oder wenigstens ein Element ausgewählt aus der Gruppe bestehend aus magentafarbenen, cyanfarbenen, gelben, roten, grünen und blauen Farbstoffen oder Pigmenten umfasst.

6. Das Tintenset nach einem der voranstehenden Ansprüche, worin:

die eine oder mehrere ionische Tensidkomponenten ausgewählt sind aus der Gruppe, bestehend aus einem Salz einer $C_1$-$C_{20}$-Alkylcarboxylsäure, einem Salz eines $C_1$-$C_{20}$-Alkylsulfonsäureesters, einem Salz einer $C_1$-$C_{20}$-Alkylsulfonsäure, einem Salz einer $C_1$-$C_{20}$-Alkylbenzensulfonsäure, einem Salz eines $C_1$-$C_{20}$-Fettsäureamins, einem quarternären Ammoniumsalz, einem Sulfoniumsalz und einem Phosphoniumsalz; und
die eine oder mehrere nicht-ionische Tensidkomponenten ausgewählt sind aus der Gruppe bestehend aus Polyoxyethylenalkylether, Polyoxyethylenalkylphenylether, Polyoxyethylen-sekundärem Alkohol-Ether, Polyoxyethylen-Oxypropylen-Blockcopolymer, Polyglycerinfettsäureester, Sorbitanfettsäureester, acetylenischem Polyalkylenoxid und acetylenischem Diol.

7. Das Tintenset nach einem der voranstehenden Ansprüche, wobei die Menge der Tensidkomponente im Bereich von etwa 0,01 bis etwa 2,0 Gewichtsteile basierend auf 1 Gewichtsteil Farbmittel ist.

8. Das Tintenset nach einem der voranstehenden Ansprüche, worin die Menge des organischen Lösungsmittels in einem Bereich von etwa 1 bis etwa 20 Gewichtsteile basierend auf 1 Gewichtsteil Farbmittel ist.

9. Das Tintenset nach einem der voranstehenden Ansprüche, worin die Menge an Wasser in einem Bereich von etwa 1 bis etwa 30 Gewichtsteile basierend auf 1 Gewichtsteil Farbmittel ist.

10. Das Tintenset nach einem der voranstehenden Ansprüche, worin die Tinte eine Oberflächenspannung von 15-70 dyne/cm und eine Viskosität von 1,0 - 20 Cp bei 20 °C hat.

11. Eine Tintenkartusche (11, 100), enthaltend das Tintenset nach einem der voranstehenden Ansprüche.

12. Ein Tintenaufzeichnungsgerät (5) einschließlich einer Tintenkartusche (11, 100) wie in Anspruch 11 beansprucht.

13. Das Tintenaufzeichnungsgerät nach Anspruch 12, worin das Tintenaufzeichnungsgerät ein Tintenstrahldrucker unter Verwendung eines Array-Druckkopfes mit 10.000 oder mehr Düsen ist.

14. Verwendung eines Tintensets, wie in einem der Ansprüche 1 bis 10 beansprucht, in einer Tonerzusammensetzung, Farbe oder Beschichtungsflüssigkeit.

## Revendications

1. Ensemble d'encres comportant au moins deux types d'encres couleur :

   le premier type d'encre couleur contenant un premier colorant, un solvant organique, de l'eau et un composant tensioactif fait d'un ou plusieurs composés tensioactifs ioniques ; et
   le deuxième type d'encre couleur contenant un deuxième colorant, un solvant organique, de l'eau et un composant tensioactif fait d'un ou plusieurs composés tensioactifs ioniques, d'un ou plusieurs composés tensioactifs non ioniques, ou d'un mélange de ceux-ci ;

   dans lequel la valeur de l'équilibre hydrophile-lipophile du composant tensioactif de la deuxième encre est inférieure à la valeur de l'équilibre hydrophile-lipophile du composant tensioactif de la première encre.

2. Ensemble d'encres selon la revendication 1, dans lequel le premier colorant est un colorant noir.

3. Ensemble d'encres selon la revendication 1 ou 2, dans lequel la différence entre les valeurs d'équilibre hydrophile-lipophile des composants tensioactifs des première et deuxième encres est dans une plage d'environ 2 à environ 20.

4. Ensemble d'encres selon l'une quelconque des revendications précédentes, dans lequel au moins un colorant est l'un d'un colorant autodispersible, un pigment autodispersible, et un pigment ou colorant utilisé conjointement avec un dispersant.

5. Ensemble d'encres selon l'une quelconque des revendications précédentes, dans lequel au moins un colorant comporte un colorant ou pigment noir, et/ou au moins un élément choisi dans le groupe constitué des colorants ou pigments magenta, cyan, jaunes, rouges, verts et bleus.

6. Ensemble d'encres selon l'une quelconque des revendications précédentes, dans lequel :

   lesdits un ou plusieurs composés tensioactifs ioniques sont choisis dans le groupe constitué d'un sel d'acide (alkyle en C1-C20)carboxylique, un sel d'ester d'acide (alkyle en Cl-C20)sulfonique, un sel d'acide (alkyle en C1-C20)sulfonique, un sel d'acide (alkyle en C1-C20)benzènesulfonique, un sel d'acide gras en C1-C20)amine, un sel d'ammonium quaternaire, un sel de sulfonium et un sel de phosphonium ; et
   lesdits un ou plusieurs composés tensioactifs non ioniques sont choisis dans le groupe constitué d'éther d'alkyle de polyoxyéthylène, d'éther d'alkylphényle de polyoxyéthylène, d'éther d'alcool secondaire de polyoxyéthylène, de copolymère séquencé polyoxyéthylène-oxypropylène, d'ester d'acide gras de polyglycérine, d'ester d'acide gras de sorbitan, d'oxyde de polyalkylène acétylénique, et d'un diol acétylénique.

7. Ensemble d'encres selon l'une quelconque des revendications précédentes, dans lequel la quantité du composant tensioactif est dans une plage d'environ 0,01 à environ 2,0 parts en poids sur la base d'une part en poids du colorant.

8. Ensemble d'encres selon l'une quelconque des revendications précédentes, dans lequel la quantité du solvant organique est dans une plage d'environ 1 à environ 20 parts en poids sur la base d'une part en poids du colorant.

9. Ensemble d'encres selon l'une quelconque des revendications précédentes, dans lequel la quantité d'eau est dans une plage d'environ 1 à environ 30 parts en poids sur la base d'une part en poids du colorant.

10. Ensemble d'encres selon l'une quelconque des revendications précédentes, dans lequel l'encre a une tension superficielle de 15 à 70 dynes/cm et une viscosité de 1,0 à 20 Cp à 20°C.

11. Cartouche d'encre (11, 100) comportant l'ensemble d'encres selon l'une quelconque des revendications précédentes.

12. Appareil d'impression à jet d'encre (5) comprenant une cartouche d'encre (11, 100) selon la revendication 11.

13. Appareil d'impression à jet d'encre selon la revendication 12, dans lequel l'appareil d'impression à jet d'encre est une imprimante à jet d'encre utilisant une tête matricielle ayant 10 000 buses ou plus.

14. Utilisation d'un ensemble d'encres selon l'une quelconque des revendications 1 à 10 dans une composition de toner, une peinture ou un liquide de revêtement.

# FIG. 1

# FIG. 2

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55065269 A
- JP 55066976 A
- US 5854307 A